# EUROPEAN PATENT APPLICATION

(11) **EP 4 656 449 A1**
(43) Date of publication of application: **03.12.2025**
(21) Application number: 25175049.3
(22) Date of filing: 08.05.2025
(51) Int. Cl.: B60L 53/62, B60L 53/66, B60L 53/67, B60L 53/68, B60L 58/12

(54) **A COMPUTER SYSTEM, A COMPUTER-IMPLEMENTED METHOD AND A FLEET SYSTEM**

(30) Priority: 29.05.2024 EP 24178760
(71) Applicant: Volvo Construction Equipment AB, 631 85 Eskilstuna (SE)
(72) Inventor: EKMAN, Gordon, 342 63 MOHEDA (SE); ÖRKENRUD, Kim, 352 64 VÄXJÖ (SE); KVIST, Roland, 360 42 BRAÅS (SE)
(74) Representative: Kransell & Wennborg KB

(57) **Abstract**

A system and a method (2) for managing charging electrically powered machines (10) in a fleet system (5) comprising a charging station (14) by obtaining (S1) by the processing circuitry (402) work schedule data, machine status and charging information. The method (2) further comprises determining (S2), by the processing circuitry, a charging process for each of the at least one electrically powered machine (10) based on the work schedule data, the machine status and the charging information, such that the charging process for each of the at least one electrically powered machine (10) is planned to be completed within a time interval (T) before a starting time (t_{W}) of a subsequent work shift of each of the at least one electrically powered machine (10), and executing (S3), by the processing circuitry (402), the determined charging process.

## Description

### TECHNICAL FIELD

The disclosure relates generally to fleet management. In particular aspects, the disclosure relates to a computer system, a computer-implemented method and a fleet system for charging of vehicles and machines comprised in the fleet system. The disclosure can be applied to a fleet of electrically powered heavy-duty vehicles, such as trucks, buses, and construction equipment, among other vehicle types. The disclosure may also be applied to fleets comprising electrically powered machines, such as stationary machines. The vehicles and/or machines may be hybrid electric vehicles and/or machines. Although the disclosure may be described with respect to a particular electric vehicle or electric machine, the disclosure is not restricted to any particular vehicle or machine.

### BACKGROUND

At work sites, such as a construction site or a mine, construction machinery operates in fleets. The machinery may be of different sizes and may be operating in different cycles/work shifts. The different machinery may have different power consumptions and may be of different types and brands with different battery capacities.

When operating an electrically powered fleet at a work site, there is a limited amount of charging power available. When a machine has a depleted battery and requires charging, the machine is usually selected for fast charging and a charging station applies its maximum available charging capacity to charge the machine. The battery of the machine may be charged within an hour and electrical loss may be substantial because charging efficiency is lower the higher the charging current. Also, battery degradation is higher during fast charging. The machine may not be scheduled for operation until next day and the battery may cool to sub-zero temperatures in cold environments.

In addition, more machines may simultaneously indicate depleted batteries and some of them may be allocated available charging points. They are connected, and fast charging may be initiated. Similar charging scenarios takes place. Work site staff finish their work shift and leave the site. Machines that were not allocated a charging point need to await the next work shift for a cold charge that will take longer time than normal because the batteries are cold. Machines having cold batteries require heating by power from the grid. Such power may be considered a waste from a cost and sustainability perspective. Both charging and discharging performance of a battery are negatively affected by low temperatures.

The various states of charging of different machinery at the work site may be completely unbalanced at the start of the next work shift.

The present disclosure improves on these issues.

### SUMMARY

According to a first aspect of the disclosure, there is provided a computer system comprising processing circuitry configured to manage charging of electric energy storage systems of electrically powered machines in a fleet system. The fleet system comprises at least one electrically powered machine and at least one charging station configured to charge the electric energy storage system of the at least one electrically powered machine. The processing circuitry is configured to obtain:
- work schedule data, indicative of at least a charging availability time, of each of the at least one electrically powered machine,
- machine status, indicative of at least a charging requirement of each of the at least one electrically powered machine,
- charging information, indicative of at least a charging capacity of the at least one charging station

The processing circuitry is further configured to determine a charging process for each of the at least one electrically powered machine based on the work schedule data, the machine status and the charging information, such that the charging process for each of the at least one electrically powered machine is planned to be completed within a time interval before a starting time of a subsequent work shift of each of the at least one electrically powered machine. The processing circuitry is further configured to execute the determined charging process by controlling the charging station to charge the electric energy storage system of the respective electrically powered machine.

By obtaining the data, the processing circuitry determines the charging process for each electrically powered machine, such as timing and rate of charge of the charging process. Thereby, the charging of the electrically powered machines of the fleet system may be managed and controlled such that the charging process is determined to be finished within the time interval before the subsequent work shift, such that the electric energy storage system is still warm from the charging process when the subsequent work shift begins, and the electrically powered machine starts to operate.

Power and time is saved by ensuring that the electric energy storage system is warm at the start of the subsequent work shift. The electric energy storage system does not need to be heated by any additional external means. The fleet of electrically powered machines may thereby be kept optimally charged and energy losses may be kept to a minimum while the at least one charging station is optimally utilized.

The term "fleet system" should herein be understood as a group of electrically powered machines communicatively connected by the computer system. The computer system may be a fleet management system. The electrically powered machines may be electrically powered heavy-duty vehicles, such as trucks, buses, and construction equipment/vehicles, among other vehicle types. The electrically powered machines may also be electrically powered stationary machinery. The term "electrically powered" should herein be understood as the main source of power for the vehicle or machine, i.e. the source of power used for propulsion and/or for performing work tasks during a work shift in the fleet system. An electrically powered machine may operate autonomously during a work shift or with an operator/driver. The electric energy storage system may be one or more batteries, such as comprising battery cells assembled in one or more battery modules.

The at least one charging station may be a stationary or mobile charging station for charging the electric energy storage system of each electrically powered machine. It may comprise one or more charging points for connection with the electrically powered machines of the fleet system. Thus, one charging station may simultaneously connect with and charge a plurality of electrically powered machines. The charging station may comprise one or more sources of electric energy, such as connection of the electrically powered machine to grid power, charging of the electrically powered machine using electric energy storages, e.g. batteries. The charging station may also comprise sources for conversion to electric power, such as fossil fueled generators, fuel cells, and hydrogen storages.

The term "work shift" should herein be understood as the work shift of an individual electrically powered machine. A plurality of electrically powered machines may each have individual work shifts, i.e. individual work task and individual work shift starting times and end times. A plurality of individual work shifts may, or may not, start and/or end at the same time.

The processing circuitry may be a control unit of the computer system, which control unit is configured to manage operations in the fleet system. The processing circuitry is configured to obtain work schedule data, which data may comprise start and finish of work shifts of an electrically powered machine. Accordingly, the work schedule data provides information to the processing circuitry about charging availability of the electrically powered machine. The work schedule data may also comprise information about work tasks being performed, and/or work tasks which are planned to be performed. Thereby, power consumption of the electrically powered machine may be calculated or estimated, which in turn may provide information about charging requirements of the electrically powered machine.

The charging information comprises at least a charging capacity of the charging station. The charging capacity relates to available power for charging and/or available charging points of the charging station. The charging information may also comprise information about ambient temperature at the charging station.

Optionally in some examples, including in at least one preferred example, the processing circuitry is further configured to determine the charging process such that the charging process is planned to be completed within the time interval before the starting time, while charging at a lowest possible power, wherein the lowest possible power is a lowest power physically possible to use while charging or a configured lowest power.

The charging at the lowest possible rate or power is the least damaging/degrading charging process for the electric energy storage system and preserves its state of health and prolongs its life.

Optionally in some examples, including in at least one preferred example, the processing circuitry is further configured to determine, for the electric energy storage system of each of the at least one electrically powered machine, a required state of charge necessary for the electrically powered machine to complete the subsequent work shift, and wherein the processing circuitry is configured to control the charging process such that at least the required state of charge is attained within the time interval before the starting time of the subsequent work shift.

Thereby, the electric energy storage system is not charged to a higher level than necessary, which is beneficial for the state of health of the electric energy storage system. A lower rate of charge is also possible when the electric energy storage system does not need to be fully charged at the start of the subsequent work shift.

Optionally in some examples, including in at least one preferred example, for a fleet system comprising a plurality of electrically powered machines, the processing circuitry is further configured to determine the charging processes of each of the plurality of electrically powered machines to alternate charging between the plurality of electrically powered machines such that the charging process of each electrically powered machine is completed within the time interval of the starting time of the subsequent work shift of the respective electrically powered machine.

When a number of electrically powered machines requiring charging is greater than the capacity of the charging station, alternating the charging process between a plurality of electrically powered machines is to be understood to switch charging between the electrically powered machines connected to the charging station such that the charging process is completed for all the connected electrically powered machines within the time interval before the starting time of the subsequent work shift. Thereby, the electric energy storage system of each electrically powered machine will be warm when the subsequent work shift starts. On some occasions, the at least one charging station may be unable to complete the charging process for all electrically powered machines that require charging. Therefore, in some examples, the processing circuitry may be configured to prioritize for which machine(s) the charging process should be completed and for which machine(s) the charging process should not be completed. The prioritization may for example be based on the type of work tasks of the respective electrically powered machine, i.e., some work tasks may be regarded as more important than other work tasks.

Optionally in some examples, including in at least one preferred example, the machine status comprises at least one of:
- a storage capacity of the electric energy storage system,
- a charging status or state of charge of the electric energy storage system, and
- a power consumption of the electrically powered machine in operation.

The obtained machine status may provide information about state of charge and/or storage capacity of the electric energy storage system and about power consumption of the electrically powered machine. To this end, the machine status may comprise information about work tasks, temperature of the electric energy storage system and about machine properties, such as technical specifications of electric motors, power take-offs and/or on-board equipment of the electrically powered machine.

Optionally in some examples, including in at least one preferred example, the power consumption is an expected power consumption estimated based on a stored history of power consumption of the electrically powered machine, and/or a calculated power consumption based on properties and/or specifications of the electrically powered machine and/or on the work schedule.

Optionally in some examples, including in at least one preferred example, the time interval before the starting time is determined based on at least one of an ambient temperature, temperature of the electric energy storage system, the work schedule data, the machine status and the charging information.

In cold ambient temperatures, the charging process may preferably be finished as close as possible to the starting time of the subsequent works shift to avoid rapid cooling of the electric energy storage system.

Optionally in some examples, including in at least one preferred example, the processing circuitry is configured to calculate the time interval to ensure that the temperature of the electric energy storage system is at least above a minimum temperature threshold at the starting time of the subsequent work shift. The time interval may hence be calculated to ensure that the temperature of the electric energy storage system is above the minimum temperature threshold, i.e. so that the temperature of the electric energy storage system is not allowed to cool below the minimum temperature threshold before the subsequent work shift starts. A technical benefit may include that power and time is saved by ensuring that the electric energy storage system is warm at the start of the subsequent work shift. By way of example, this may result in that the electric energy storage system does not need to be heated by any additional external means before the start of the subsequent work shift.

Optionally in some examples, including in at least one preferred example, the rate of charge is varied during the charging process to ensure that the temperature of the electric energy storage system is at least above the minimum temperature threshold at the starting time of the subsequent work shift. For example, during a final phase of the charging process, the rate of charge may be increased to ensure that the temperature of the electric energy storage system is at least above the minimum temperature threshold at the starting time of the subsequent work shift. A technical benefit may include that power and time is saved by ensuring that the electric energy storage system is warm at the start of the subsequent work shift. The final phase of the charging process may correspond to 50 % or less, 40 % or less, 30% or less, 20% or less, or 10 % or less, of the total time of the charging process.

Optionally in some examples, including in at least one preferred example, the minimum temperature threshold at the starting time of the subsequent work shift for at least one electrically powered machine is varied based on a planned workload of the electrically powered machine during the subsequent work shift. A technical benefit may include that the starting temperature is adapted for the planned workload of the electrically powered machine during the subsequent work shift. For example, a high workload may cause the electric energy storage system to reach higher temperatures during operation. In such cases, a lower starting temperature can help achieve a lower operating temperature, at least during the initial phase of the work shift. This may lead to reduced degradation of the energy storage system and/or lessen the reliance on a tempering control system (e.g., for cooling). In a similar manner, a relatively low workload may result in relatively lower temperatures of the electric energy storage system during operation. Thereby, a relatively higher starting temperature may result in a higher more preferred operating temperature.

Optionally in some examples, including in at least one preferred example, the processing circuitry is configured to determine the charging process for each of the at least one electrically powered machine such that the charging process for each of the at least one electrically powered machine is planned to be initiated at a time point when a temperature of the electric energy storage system of the respective electrically powered machine satisfies a starting temperature criterion. A technical benefit may include that charging is initiated when the electric energy storage system has a temperature which is appropriate for charging, i.e., so that the temperature is not too high or too low. Too high temperature when initiating charging may result in increased degradation. Too low temperature may result in slower charging or may even prevent charging. The starting temperature criterion as disclosed herein may be defined by a starting temperature range, i.e., by a minimum temperature level and a maximum temperature level.

Optionally in some examples, including in at least one preferred example, the processing circuitry is configured to determine the charging process for at least one electrically powered machine such that the charging process for the at least one electrically powered machine is planned to be initiated at a time point when a temperature of the electric energy storage system of the respective electrically powered machine satisfies a starting temperature criterion.

Optionally in some examples, including in at least one preferred example, the processing circuitry is configured to determine the charging process for at least one electrically powered machine such that the charging process for the at least one electrically powered machine is planned to be initiated at a delayed time point after a preceding work shift when a temperature of the electric energy storage system of the electrically powered machine has been lowered and satisfies a starting temperature criterion. In some examples, the delayed time point may correspond to a time point when the temperature of the electric energy storage system has reached the minimum temperature level of the starting temperature criterion. A technical benefit may include that charging is delayed while still the charging process is completed within the time interval. Delayed charging may result in reduced degradation of the energy storage system. In some examples, the processing circuitry is configured to determine the charging process for each of the at least one electrically powered machine such that the charging process for each of the at least one electrically powered machine is planned to be initiated at a delayed time point after a preceding work shift when a temperature of the electric energy storage system of the electrically powered machine has been lowered and satisfies a starting temperature criterion.

According to a second aspect of the disclosure, there is provided a computer-implemented method for managing charging of electric energy storage systems of electrically powered machines in a fleet system. The fleet system comprises the computer system according to any of the examples of the first aspect of the disclosure, at least one electrically powered machine and at least one charging station configured to charge the electric energy storage system of the at least one electrically powered machine.

The method comprises obtaining, by the processing circuitry:
- work schedule data, indicative of at least a charging availability time, of each of the at least one electrically powered machine,
- machine status, indicative of at least a charging requirement of each of the at least one electrically powered machine,
- charging information, indicative of at least a charging capacity of the at least one charging station, and

The method further comprises determining, by the processing circuitry, a charging process for each of the at least one electrically powered machine based on the work schedule data, the machine status and the charging information, such that the charging process for each of the at least one electrically powered machine is planned to be completed within a time interval before a starting time of a subsequent work shift of each of the at least one electrically powered machine. The method further comprises executing, by the processing circuitry, the determined charging process by controlling the charging station to charge the electric energy storage system of the respective electrically powered machine.

The features and advantages described above in conjunction with the first aspect of the disclosure apply mutatis mutandis to the second aspect of the disclosure and will not be repeated here.

Optionally in some examples, including in at least one preferred example, the charging process is determined such that the charging process is planned to be completed within the time interval before the starting time, while charging at a lowest possible power, wherein the lowest possible power is a lowest power physically possible to use while charging or a configured lowest power.

Optionally in some examples, including in at least one preferred example, determining the charging process further comprises determining a required state of charge of the electric energy storage system necessary for the electrically powered machine to complete the subsequent work shift, and controlling, by the processing circuitry, the execution of the charging process such that at least the required state of charge is attained within the time interval before the starting time of the subsequent work shift.

Optionally in some examples, including in at least one preferred example, for a fleet system comprising a plurality of electrically powered machines, determining the charging processes of each of the plurality of electrically powered machines further comprises alternating charging between the plurality of electrically powered machines such that the charging process of each electrically powered machine is completed within the time interval before the starting time of the subsequent work shift of the respective electrically powered machine.

Optionally in some examples, including in at least one preferred example, the machine status comprises at least one of:
- a storage capacity of the electric energy storage system,
- a charging status of the electric energy storage system, and
- a power consumption of the electrically powered machine in operation.

Optionally in some examples, including in at least one preferred example, the power consumption is an expected power consumption estimated based on a stored history of power consumption of the electrically powered machine, and/or a calculated power consumption based on properties of the electrically powered machine and on the work schedule.

Optionally in some examples, including in at least one preferred example, the time interval before the starting time is determined based on at least one of an ambient temperature, the work schedule data, the machine status and the charging information.

Optionally in some examples, including in at least one preferred example, the method comprises calculating the time interval to ensure that the temperature of the electric energy storage system is at least above a minimum temperature threshold at the starting time of the subsequent work shift.

Optionally in some examples, including in at least one preferred example, the rate of charge is varied during the charging process to ensure that the temperature of the electric energy storage system is at least above the minimum temperature threshold at the starting time of the subsequent work shift.

Optionally in some examples, including in at least one preferred example, the minimum temperature threshold at the starting time of the subsequent work shift for at least one electrically powered machine is varied based on a planned workload of the electrically powered machine during the subsequent work shift.

Optionally in some examples, including in at least one preferred example, the method further comprises determining the charging process for each of the at least one electrically powered machine such that the charging process for each of the at least one electrically powered machine is planned to be initiated at a time point when a temperature of the electric energy storage system of the respective electrically powered machine satisfies a starting temperature criterion.

Optionally in some examples, including in at least one preferred example, the method further comprises determining the charging process for at least one electrically powered machine such that the charging process for the at least one electrically powered machine is planned to be initiated at a delayed time point after a preceding work shift when a temperature of the electric energy storage system of the electrically powered machine has been lowered and satisfies a starting temperature criterion.

According to a third aspect of the disclosure, there is provided a computer program product comprising program code for performing, when executed by the processing circuitry, the method of any one of the examples of the second aspect of the disclosure.

According to a fourth aspect of the disclosure, there is provided a non-transitory computer-readable storage medium comprising instructions, which when executed by the processing circuitry, cause the processing circuitry to perform the method of any one of the examples of the second aspect of the disclosure.

According to a fifth aspect of the disclosure, there is provided a fleet system comprising the computer system of any of the examples of the first aspect of the disclosure, at least one charging station, and at least one electrically powered machine comprising an electric energy storage system.

The features and advantages described above in conjunction with the first and second aspects of the disclosure apply mutatis mutandis to the fifth aspect of the disclosure.

The advantages of the disclosed computer system and method are immediately realized by a skilled person as providing a fleet system, i.e. a fleet of electrically powered vehicles and/or machines which fleet is optimally charged, optimally using the charging stations, and which saves time, energy and health of the comprised electric energy storage systems.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**Fig. 1** is an exemplary fleet system according to an example.
**Figs. 2A-C** are exemplary diagrams of charging processes according to examples.
**Fig. 3** is an exemplary method according to an example.
**Fig. 4** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The present disclosure improves on management of charging of electrically powered machines at a work site. Conventionally, vehicles and machines are fully charged as quickly as possible when control systems indicate that charging is necessary. It may lead to unnecessary degradation of batteries, cold starts of batteries, which results in power loss or in time lost when heating the batteries, and to machines and vehicles requiring charging soon after the work shift starts.

By the present planned charging of machines and/or vehicles of a fleet, the timing of charging is balanced so that charging may be performed at a relatively slow rate, and only to a required level of charge, and such that the charging process is finished shortly before a start of a work shift, leaving the batteries warm at start-up.

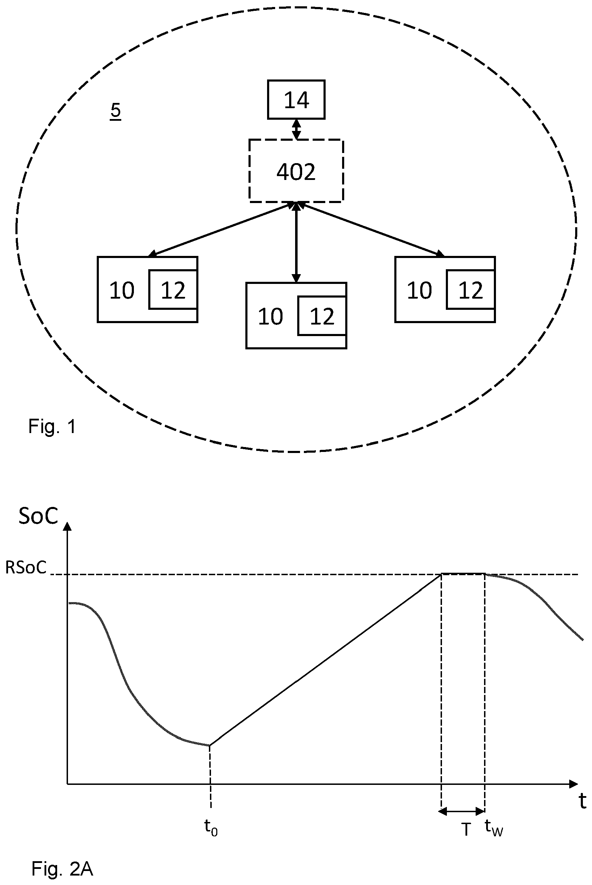

**Fig. 1** is an exemplary fleet system 5 according to an example. The fleet system 5 comprises a computer system 400, implicitly disclosed in **Fig.1** by the processing circuitry 402. The fleet system 5 further comprises at least one charging station 14, and at least one electrically powered machine 10 comprising an electric energy storage system 12.

The computer system 400 comprises processing circuitry 402 configured to manage charging of electric energy storage systems 12 of electrically powered machines 10 in the fleet system 5. The fleet system 5 comprises at least one electrically powered machine and at least one charging station 14 configured to charge the electric energy storage system 12 of the at least one electrically powered machine 10. The processing circuitry 402 is configured to obtain:
- work schedule data, indicative of at least a charging availability time, of each of the at least one electrically powered machine 10,
- machine status, indicative of at least a charging requirement of each of the at least one electrically powered machine 10, and
- charging information, indicative of at least a charging capacity of the at least one charging station 14.

The processing circuitry 402 is further configured to determine a charging process for each of the at least one electrically powered machine 10 based on the work schedule data, the machine status and the charging information, such that the charging process for each of the at least one electrically powered machine 10 is planned to be completed within a time interval T before a starting time t_{W} of a subsequent work shift of each of the at least one electrically powered machine 10. The processing circuitry 402 is further configured to execute the determined charging process by controlling the charging station 14 to charge the electric energy storage system 12 of the respective electrically powered machine 10.

By obtaining the data, the processing circuitry 402 determines the charging process for each electrically powered machine 10, such as timing and rate of charge of the charging process. Thereby, the charging of the electrically powered machines 10 of the fleet system 5 may be managed and controlled such that the charging process is determined to be finished within the time interval T before the subsequent work shift, such that the electric energy storage system 12 is still warm from the charging process when the subsequent work shift begins, and the electrically powered machine 10 starts to operate.

Power and time may be saved by ensuring that the electric energy storage system 12 is warm at the starting time t_{W} of the subsequent work shift. The electric energy storage system 12 does not need to be heated by any additional external means. Conventionally, machines are started up cold, or their electric energy storage systems are pre-heated before starting, using e.g. grid power. By the present disclosure, such pre-heating is a waste of time and energy. The fleet of electrically powered machines 10 may thereby be kept adequately charged and energy losses may be reduced while the at least one charging station 14 is efficiently utilized.

The term "fleet system" 5 should herein be understood as a plurality of electrically powered machines 10 communicatively connected to the computer system 400. The computer system 400 may be a fleet management system. The electrically powered machines 10 may be electrically powered heavy-duty vehicles, such as trucks, buses, and construction equipment/vehicles, among other vehicle types. The electrically powered machines 10 may also be electrically powered stationary machinery. The term "electrically powered" should herein be understood as a machine 10 using electric energy as its main source of power for propulsion and/or for performing work tasks during a work shift in the fleet system 5. An electrically powered machine 10 may operate autonomously during a work shift or with an operator/driver. The electric energy storage system 12 may be, or comprise, one or more batteries. A battery may comprise battery cells assembled in one or more battery modules.

The at least one charging station 14 may be a stationary or mobile charging station 14 for charging the electric energy storage system 12 of each electrically powered machine 10. It may comprise one or more charging points for connection with the electrically powered machines 10 of the fleet system 5. Thus, one charging station 14 may simultaneously connect with and charge a plurality of electrically powered machines 10. The charging station 14 may comprise one or more sources of electric energy, such as acting as an interface for connection of the electrically powered machine 10 to grid power or charging of the electrically powered machine 10 using electric energy storages comprised in the charging station 14, e.g. batteries. The charging station 14 may also comprise devices for conversion of other energy sources to electric power, such as fossil fueled generators, fuel cells, and hydrogen storages.

The term "work shift" should herein be understood as the work shift of an individual electrically powered machine 10. A plurality of electrically powered machines 10 may each have individual work shifts, i.e. individual work task and individual work shift starting times t_{W} and end times. A plurality of individual work shifts may, or may not, start and end at the same time.

The processing circuitry 402 may be a control unit of the computer system 400, which control unit is configured to manage operations in the fleet system 5. The processing circuitry 402 is configured to obtain work schedule data, which data may comprise starting times t_{W} and finish times of work shifts of an electrically powered machine 10. Accordingly, the work schedule data provides information to the processing circuitry 402 about charging availability of the electrically powered machine 10. The work schedule data may also comprise information about work tasks being performed, and/or work tasks which are planned to be performed. Thereby, power consumption of the electrically powered machine 10 may be calculated or estimated, which in turn may provide information about charging requirements of the electrically powered machine 10.

The charging information comprises at least a charging capacity of the charging station 14. The charging capacity relates to available power for charging electrically powered machines 10 and/or available charging points of the charging station 14. The charging information may also comprise information about ambient temperature at the charging station 14.

The machine status may comprise at least one of:
- a storage capacity of the electric energy storage system 12,
- a charging status or state of charge of the electric energy storage system 12, and
- a power consumption of the electrically powered machine 10 in operation.

The obtained machine status may provide information about state of charge and/or storage capacity of the electric energy storage system 12 and about power consumption of the electrically powered machine 10. To this end, the machine status may comprise information about work tasks, temperature of the electric energy storage system 12 and about machine properties, such as technical specifications of electric motors, power take-offs and/or on-board equipment of the electrically powered machine.

The power consumption may be an expected power consumption estimated based on a stored history of power consumption of the electrically powered machine 10, and/or a calculated power consumption based on properties and/or specifications of the electrically powered machine 10 and/or on the work schedule.

As illustrated in **Fig. 2A****,** the processing circuitry 40 may further be configured to determine the charging process such that the charging process is planned to be completed within the time interval T before the starting time t_{W}, while charging at a lowest possible power. The lowest possible power is a lowest power physically possible to use while charging or a configured lowest power. The charging at the lowest possible power or rate is the least damaging/degrading charging process for the electric energy storage system and preserves its state of health and prolongs its life. As shown in **Fig. 2A****,** the rate of charging is represented by an inclination of the line between an end t0 of a work shift and the starting time t_{W} of the subsequent work shift. The time interval T before the starting time is indicative of a period of time during which the electric energy storage system 12 of the electrically powered machine 10 will maintain an adequate temperature after completing the charging process until the starting time t_{W} of the subsequent work shift. It can be seen that, the lowest rate of charging of a continuous charging process (without interruptions) is attained when the charging is completed just in time for the start of the subsequent work shift, i.e. when the time interval T is minimized.

The charging power may also be affected by the source of energy used for charging. In case of DC charging, the charging power is preferably as low as possible according to the reasoning above. However, in case of AC charging, it may be necessary to increase the charging power because relative losses may be great when AC charging at low power, especially in low ambient temperatures. For example, in case of AC charging, the charging power may be a configured AC charging power which e.g. may vary depending ambient temperatures.

The processing circuitry 402 may further be configured to determine, for the electric energy storage system 12 of each of the at least one electrically powered machine 10, a required state of charge (RSoC) necessary for the electrically powered machine to complete the subsequent work shift. The processing circuitry may be configured to control the charging process such that at least the required state of charge RSoC is attained within the time interval T before the starting time t_{W} of the subsequent work shift. The electric energy storage system 12 does thereby not have to be charged to a higher level than necessary, which is beneficial for the state of health of the electric energy storage system 12. A lower rate of charge is also enabled when the electric energy storage system 12 does not need to be fully charged at the starting time t_{W} of the subsequent work shift.

The time interval T before the starting time is determined based on at least one of an ambient temperature, a temperature of the electric energy storage system 12, the work schedule data, the machine status and the charging information. The time interval T may be calculated by the processing circuitry 402 to ensure that the temperature of the electric energy storage system 12 is at least above a minimum temperature threshold at the starting time of the subsequent work shift, i.e. the time interval may be limited such that the temperature of the electric energy storage system 12 is not allowed to cool to a temperature below the minimum temperature threshold before the subsequent work shift starts. For instance, in cold ambient temperatures, the charging process may preferably be finished as close as possible to the starting time t_{W} of the subsequent works shift to avoid rapid cooling of the electric energy storage system 12.

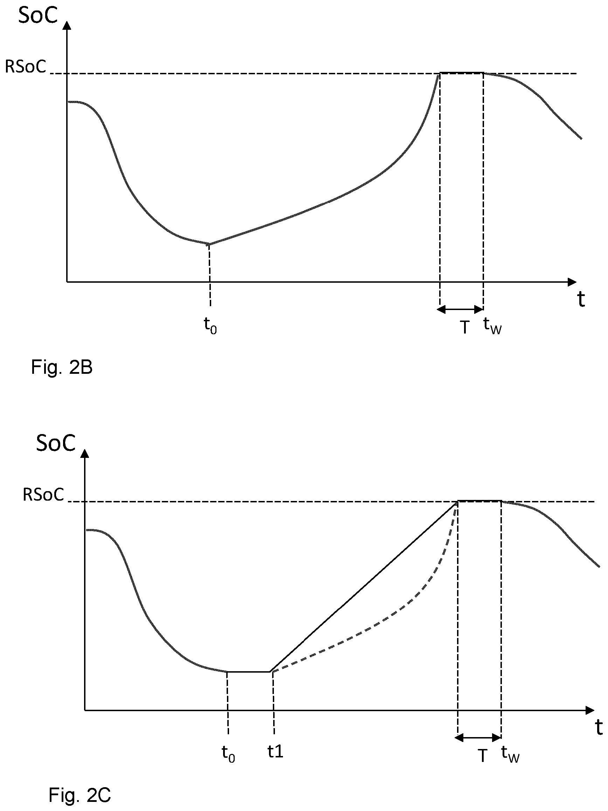

For a fleet system 5 comprising a plurality of electrically powered machines 10, the processing circuitry 402 may further be configured to determine the charging processes of each of the plurality of electrically powered machines 10 to alternate charging between the plurality of electrically powered machines 10 such that the charging process of each electrically powered machine 10 is completed within the time interval T of the starting time t_{W} of the subsequent work shift of the respective electrically powered machine 10. Accordingly, when a number of electrically powered machines 10 requiring charging is greater than the capacity of the charging station 14, alternating the charging process between the plurality of electrically powered machines 10 is to be understood to control the charging process to switch charging between the electrically powered machines 10 connected to the charging station 14 such that the charging process is completed for all the connected electrically powered machines 10 within the time interval T before the stating time t_{W} of the subsequent work shift. Thereby, the electric energy storage system 12 of each electrically powered machine 10 will be adequately warm, i.e. warmer than the minimum temperature threshold, at the starting time t_{W} of the subsequent work shift. **FIG. 2B** is another exemplary diagram of a charging process according to an example. As illustrated in **FIG. 2B****,** the rate of charge may be varied during the charging process to ensure that the temperature of the electric energy storage system 12 is at least above the minimum temperature threshold at the starting time tw of the subsequent work shift. For example, during a final phase of the charging process, the rate of charge may be increased to ensure that the temperature of the electric energy storage system 12 is at least above the minimum temperature threshold at the starting time tw of the subsequent work shift. Thereby, power and time may be saved by ensuring that the electric energy storage system is warm at the start of the subsequent work shift. The final phase of the charging process may correspond to 50 % or less, 40 % or less, 30% or less, 20% or less, or 10 % or less, of the total time of the charging process. The total time of the charging process is in this example from the time t0 to the time tw minus T. Accordingly, in this example the charging process is not represented by a straight inclined line as in **FIG. 2A****.** Instead, the charging process is represented by a curve.

The minimum temperature threshold at the starting time tw of the subsequent work shift for at least one electrically powered machine 10 may be varied based on a planned workload of the electrically powered machine 10 during the subsequent work shift. Thereby the starting temperature may be adapted for the planned workload of the electrically powered machine 10 during the subsequent work shift. For example, a high workload may cause the electric energy storage system 12 to reach higher temperatures during operation. In such cases, a lower starting temperature can help achieve a lower operating temperature, at least during the initial phase of the work shift. This may lead to reduced degradation of the energy storage system 12 and/or lessen the reliance on a tempering control system (e.g., for cooling). In a similar manner, a relatively low workload may result in relatively lower temperatures of the electric energy storage system 12 during operation. Thereby, a higher starting temperature may result in a higher more preferred operating temperature.

**FIG. 2C** is another exemplary diagram of a charging process according to an example. As illustrated in **FIG. 2C****,** the processing circuitry 402 may be configured to determine the charging process for each of the at least one electrically powered machine 10 such that the charging process for each of the at least one electrically powered machine 10 is planned to be initiated at a time point t1 when a temperature of the electric energy storage system 12 of the respective electrically powered machine 10 satisfies a starting temperature criterion. Thereby charging may be initiated when the electric energy storage system 12 has a temperature which is appropriate for charging, i.e., so that the temperature is not too high or too low. The starting temperature criterion may be defined by a starting temperature range, i.e., by a minimum temperature level and a maximum temperature level. As shown in **FIG. 2C****,** the charging process may be represented by an inclined line (i.e. a constant charging rate) or a curve (as shown by a dotted curve), i.e., the charging rate may vary over time.

As further indicated in **FIG. 2C****,** the processing circuitry 402 may be configured to determine the charging process for at least one electrically powered machine 10 such that the charging process for the at least one electrically powered machine 10 is planned to be initiated at a delayed time point t1 after a preceding work shift when a temperature of the electric energy storage system 12 of the electrically powered machine has been lowered and satisfies a starting temperature criterion. In some examples, the delayed time point t1 may correspond to a time point when the temperature of the electric energy storage system 12 has reached the minimum temperature level of the starting temperature criterion. Thereby the charging is delayed while still the charging process is completed within the time interval T. Delayed charging may result in reduced degradation of the energy storage system 12. In some examples, the processing circuitry 402 may be configured to determine the charging process for each of the at least one electrically powered machine 10 such that the charging process for each of the at least one electrically powered machine 10 is planned to be initiated at a delayed time point after a preceding work shift when a temperature of the electric energy storage system 12 of the electrically powered machine 10 has been lowered and satisfies a starting temperature criterion.

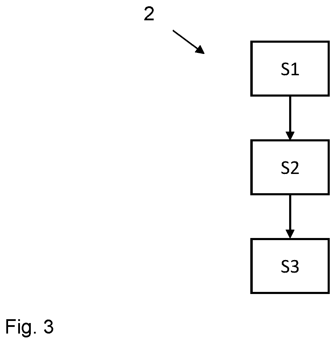

**Fig. 3** shows a flow chart of a computer-implemented method 2 for managing charging of electric energy storage systems 12 of electrically powered machines 10 in a fleet system 5. As described above, the fleet system comprises 5 the computer system 400 according to any of the examples of the first aspect of the disclosure, at least one electrically powered machine 10 and at least one charging station 14 configured to charge the electric energy storage system 12 of the at least one electrically powered machine 10.

The method 2 comprises obtaining S1, by the processing circuitry 402:
- work schedule data, indicative of at least a charging availability time, of each of the at least one electrically powered machine 10,
- machine status, indicative of at least a charging requirement of each of the at least one electrically powered machine 10,
- charging information, indicative of at least a charging capacity of the at least one charging station 14.

The method 2 further comprises determining S2, by the processing circuitry 402, a charging process for each of the at least one electrically powered machine 10 based on the work schedule data, the machine status and the charging information, such that the charging process for each of the at least one electrically powered machine 10 is planned to be completed within a time interval T before a starting time t_{W} of a subsequent work shift of each of the at least one electrically powered machine 10. The method 2 further comprises executing S3, by the processing circuitry 402, the determined charging process by controlling the charging station 14 to charge the electric energy storage system 12 of the respective electrically powered machine 10.

As described hereinabove, the charging process may be determined such that the charging process is planned to be completed within the time interval T before the starting time t_{W} of the subsequent work shift while charging at a lowest possible power, wherein the lowest possible power is a lowest power physically possible to use while charging or a configured lowest power.

The machine status may comprise at least one of:
- a storage capacity of the electric energy storage system,
- a charging status of the electric energy storage system, and
- a power consumption of the electrically powered machine in operation.

The power consumption may be an expected power consumption estimated based on a stored history of power consumption of the electrically powered machine 10, and/or a calculated power consumption based on properties of the electrically powered machine 10 and on the work schedule. The estimated or calculated power consumption is used to determine a required state of charge RSoC of the electric energy storage system 12 for the electrically powered machine 10 to be able to complete the subsequent work shift.

As mentioned, determining S2 the charging process may further comprise determining a required state of charge RSoC of the electric energy storage system 12 necessary for the electrically powered machine 10 to complete the subsequent work shift, and controlling, by the processing circuitry 402, the execution of the charging process such that at least the required state of charge RSoC is attained within the time interval T before the starting time t_{W} of the subsequent work shift.

For a fleet system 5 comprising a plurality of electrically powered machines 10, determining S2 the charging processes of each of the plurality of electrically powered machines 10 may further comprise alternating charging between the plurality of electrically powered machines 10 such that the charging process of each electrically powered machine 10 is completed within the time interval T before the starting time t_{W} of the subsequent work shift of the respective electrically powered machine 10.

The time interval T before the starting time t_{W} of the subsequent work shift may be determined based on at least one of an ambient temperature, the work schedule data, the machine status and the charging information.

The method may comprise calculating the time interval T to ensure that the temperature of the electric energy storage system 12 is at least above a minimum temperature threshold at the starting time tw of the subsequent work shift.

The rate of charge may be varied during the charging process to ensure that the temperature of the electric energy storage system 12 is at least above the minimum temperature threshold at the starting time tw of the subsequent work shift.

The minimum temperature threshold at the starting time tw of the subsequent work shift for at least one electrically powered machine 10 may be varied based on a planned workload of the electrically powered machine 10 during the subsequent work shift.

The method may further comprise determining the charging process for each of the at least one electrically powered machine 10 such that the charging process for each of the at least one electrically powered machine 10 is planned to be initiated at a time point t1 when a temperature of the electric energy storage system 12 of the respective electrically powered machine 10 satisfies a starting temperature criterion.

The method may further comprise determining the charging process for at least one electrically powered machine 10 such that the charging process for the at least one electrically powered machine 10 is planned to be initiated at a delayed time point t1 after a preceding work shift when a temperature of the electric energy storage system 12 of the electrically powered machine 10 has been lowered and satisfies a starting temperature criterion.

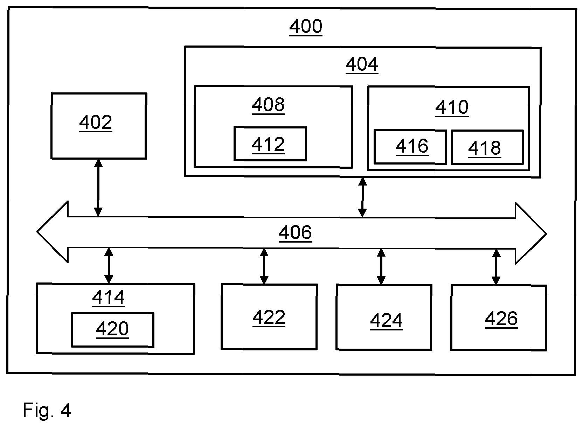

**Fig. 4** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

### LIST OF EXAMPLES

1. A computer system (400) comprising processing circuitry (402) configured to manage charging of electric energy storage systems (12) of electrically powered machines (10) in a fleet system (5), the fleet system (5) comprising at least one electrically powered machine and at least one charging station (14) configured to charge the electric energy storage system (12) of the at least one electrically powered machine (10),
   the processing circuitry (402) being configured to obtain:
      - work schedule data, indicative of at least a charging availability time, of each of the at least one electrically powered machine (10),
      - machine status, indicative of at least a charging requirement of each of the at least one electrically powered machine (10),
      - charging information, indicative of at least a charging capacity of the at least one charging station (14), and
   wherein the processing circuitry (402) is further configured to determine a charging process for each of the at least one electrically powered machine (10) based on the work schedule data, the machine status and the charging information, such that the charging process for each of the at least one electrically powered machine (10) is planned to be completed within a time interval (T) before a starting time (t_{W}) of a subsequent work shift of each of the at least one electrically powered machine (10), and wherein the processing circuitry (402) is further configured to execute the determined charging process by controlling the charging station (14) to charge the electric energy storage system (12) of the respective electrically powered machine (10).
2. The computer system (400) of example 1, wherein the processing circuitry (402) is further configured to determine the charging process such that the charging process is planned to be completed within the time interval (T) before the starting time (t_{W}), while charging at a lowest possible power, wherein the lowest possible power is a lowest power physically possible to use while charging or a configured lowest power.
3. The computer system (400) of any of examples 1-2, wherein the processing circuitry (402) is further configured to determine, for the electric energy storage system (12) of each of the at least one electrically powered machine (10), a required state of charge necessary for the electrically powered machine (10) to complete the subsequent work shift, and wherein the processing circuitry (402) is configured to control the charging process such that at least the required state of charge is attained within the time interval (T) before the starting time (t_{W}) of the subsequent work shift.
4. The computer system (400) of any of examples 1-3, wherein for a fleet system (5) comprising a plurality of electrically powered machines (10), the processing circuitry (402) is further configured to determine the charging processes of each of the plurality of electrically powered machines (10) to alternate charging between the plurality of electrically powered machines (10) such that the charging process of each electrically powered machine (10) is completed within the time interval (T) of the starting time (t_{W}) of the subsequent work shift of the respective electrically powered machine (10).
5. The computer system (400) of any of examples 1-4, wherein the machine status comprises at least one of:
   - a storage capacity of the electric energy storage system (12),
   - a charging status of the electric energy storage system (12), and
   - a power consumption of the electrically powered machine (10) in operation.
6. The computer system (400) of example 5, wherein the power consumption is an expected power consumption estimated based on a stored history of power consumption of the electrically powered machine (10), and/or a calculated power consumption based on properties of the electrically powered machine (10) and on the work schedule.
7. The computer system (400) of any of examples 1-6, wherein the time interval (T) before the starting time (t_{W}) is determined based on at least one of an ambient temperature, the work schedule data, the machine status and the charging information.
8. The computer system (400) of example 7, wherein the processing circuitry (402) is configured to calculate the time interval (T) to ensure that the temperature of the electric energy storage system (12) is at least above a minimum temperature threshold at the starting time (tw) of the subsequent work shift.
9. The computer system (400) of example 8, wherein the rate of charge is varied during the charging process to ensure that the temperature of the electric energy storage system (12) is at least above the minimum temperature threshold at the starting time (tw) of the subsequent work shift.
10. The computer system (400) of example 7 or 8, wherein the minimum temperature threshold at the starting time (tw) of the subsequent work shift for at least one electrically powered machine (10) is varied based on a planned workload of the electrically powered machine (10) during the subsequent work shift.
11. The computer system (400) of any of examples 1-10, wherein the processing circuitry (402) is configured to determine the charging process for each of the at least one electrically powered machine (10) such that the charging process for each of the at least one electrically powered machine (10) is planned to be initiated at a time point when a temperature of the electric energy storage system (12) of the respective electrically powered machine (10) satisfies a starting temperature criterion.
12. The computer system (400) of any of examples 1-11, wherein the processing circuitry (402) is configured to determine the charging process for at least one electrically powered machine (10) such that the charging process for the at least one electrically powered machine (10) is planned to be initiated at a delayed time point after a preceding work shift when a temperature of the electric energy storage system (12) of the electrically powered machine (10) has been lowered and satisfies a starting temperature criterion.
13. A computer-implemented method (2) for managing charging of electric energy storage systems (12) of electrically powered machines (10) in a fleet system (5), the fleet system (5) comprising the computer system according to any of examples 1-12, at least one electrically powered machine (10) and at least one charging station (14) configured to charge the electric energy storage system (12) of the at least one electrically powered machine (10),
   the method (2) comprises obtaining (S1) by the processing circuitry (402):
      - work schedule data, indicative of at least a charging availability time, of each of the at least one electrically powered machine (10),
      - machine status, indicative of at least a charging requirement of each of the at least one electrically powered machine (10),
      - charging information, indicative of at least a charging capacity of the at least one charging station (14), and
   wherein the method (2) further comprises determining (S2), by the processing circuitry, a charging process for each of the at least one electrically powered machine (10) based on the work schedule data, the machine status and the charging information, such that the charging process for each of the at least one electrically powered machine (10) is planned to be completed within a time interval (T) before a starting time (t_{W}) of a subsequent work shift of each of the at least one electrically powered machine (10), and executing (S3), by the processing circuitry (402), the determined charging process by controlling the charging station (14) to charge the electric energy storage system (12) of the respective electrically powered machine (10).
14. The method of example 13, wherein the charging process is determined such that the charging process is planned to be completed within the time interval (T) before the starting time (t_{W}) of the subsequent work shift while charging at a lowest possible power, wherein the lowest possible power is a lowest power physically possible to use while charging or a configured lowest power.
15. The method of any of examples 13-14, wherein determining (S2) the charging process further comprises determining a required state of charge (RSoC) of the electric energy storage system (12) necessary for the electrically powered machine (10) to complete the subsequent work shift, and controlling, by the processing circuitry (402), the execution of the charging process such that at least the required state of charge (RSoC) is attained within the time interval (T) before the starting time (t_{W}) of the subsequent work shift.
16. The method of any of examples 13-15, wherein for a fleet system (5) comprising a plurality of electrically powered machines (10), determining (S2) the charging processes of each of the plurality of electrically powered machines (10) further comprises alternating charging between the plurality of electrically powered machines (10) such that the charging process of each electrically powered machine (10) is completed within the time interval (T) before the starting time (t_{W}) of the subsequent work shift of the respective electrically powered machine (10).
17. The method (2) of any of examples 13-16, wherein the machine status comprises at least one of:
   - a storage capacity of the electric energy storage system (12),
   - a charging status of the electric energy storage system (12), and
   - a power consumption of the electrically powered machine (10) in operation.
18. The method (2) of example 17, wherein the power consumption is an expected power consumption estimated based on a stored history of power consumption of the electrically powered machine (10), and/or a calculated power consumption based on properties of the electrically powered machine (10) and on the work schedule.
19. The method (2) of any of examples 13-18, wherein the time interval (T) before the starting time (t_{W}) is determined based on at least one of an ambient temperature, the work schedule data, the machine status and the charging information.
20. The method (2) of example 19, wherein the method comprises calculating the time interval (T) to ensure that the temperature of the electric energy storage system (12) is at least above a minimum temperature threshold at the starting time (tw) of the subsequent work shift.
21. The method (2) of example 20, wherein the rate of charge is varied during the charging process to ensure that the temperature of the electric energy storage system (12) is at least above the minimum temperature threshold at the starting time (tw) of the subsequent work shift.
22. The method (2) of any of examples 20-21, wherein the minimum temperature threshold at the starting time of the subsequent work shift for at least one electrically powered machine (10) is varied based on a planned workload of the electrically powered machine (12) during the subsequent work shift.
23. The method (2) of any of examples 13-22, wherein the method further comprises determining the charging process for each of the at least one electrically powered machine (10) such that the charging process for each of the at least one electrically powered machine (10) is planned to be initiated at a time point (t1) when a temperature of the electric energy storage system (12) of the respective electrically powered machine (10) satisfies a starting temperature criterion.
24. The method (2) of any of examples 13-23,wherein the method further comprises determining the charging process for at least one electrically powered machine (10) such that the charging process for the at least one electrically powered machine (10) is planned to be initiated at a delayed time point (t1) after a preceding work shift when a temperature of the electric energy storage system (12) of the electrically powered machine has been lowered and satisfies a starting temperature criterion.
25. A computer program product (420) comprising program code for performing, when executed by the processing circuitry (402), the method (2) of any one of examples 13-24.
26. A non-transitory computer-readable storage medium (414) comprising instructions, which when executed by the processing circuitry (402), cause the processing circuitry (402) to perform the method (2) of any one of examples 13-24.
27. A fleet system (5) comprising the computer system (400) of any of examples 1-12, at least one charging station (14), and at least one electrically powered machine (10) comprising an electric energy storage system (12).

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (400) comprising processing circuitry (402) configured to manage charging of electric energy storage systems (12) of electrically powered machines (10) in a fleet system (5), the fleet system (5) comprising at least one electrically powered machine and at least one charging station (14) configured to charge the electric energy storage system (12) of the at least one electrically powered machine (10),
the processing circuitry (402) being configured to obtain:
- work schedule data, indicative of at least a charging availability time, of each of the at least one electrically powered machine (10),
- machine status, indicative of at least a charging requirement of each of the at least one electrically powered machine (10),
- charging information, indicative of at least a charging capacity of the at least one charging station (14), and
wherein the processing circuitry (402) is further configured to determine a charging process for each of the at least one electrically powered machine (10) based on the work schedule data, the machine status and the charging information, such that the charging process for each of the at least one electrically powered machine (10) is planned to be completed within a time interval (T) before a starting time (t_{W}) of a subsequent work shift of each of the at least one electrically powered machine (10), and wherein the processing circuitry (402) is further configured to execute the determined charging process.

2. The computer system (400) of claim 1, wherein the processing circuitry (402) is further configured to determine the charging process such that the charging process is planned to be completed within the time interval (T) before the starting time (t_{W}), while charging at a lowest possible power, wherein the lowest possible power is a lowest power physically possible to use while charging or a configured lowest power.

3. The computer system (400) of any of claims 1-2, wherein the processing circuitry (402) is further configured to determine, for the electric energy storage system (12) of each of the at least one electrically powered machine (10), a required state of charge necessary for the electrically powered machine (10) to complete the subsequent work shift, and wherein the processing circuitry (402) is configured to control the charging process such that at least the required state of charge is attained within the time interval (T) before the starting time (t_{W}) of the subsequent work shift.

4. The computer system (400) of any of claims 1-3, wherein for a fleet system (5) comprising a plurality of electrically powered machines (10), the processing circuitry (402) is further configured to determine the charging processes of each of the plurality of electrically powered machines (10) to alternate charging between the plurality of electrically powered machines (10) such that the charging process of each electrically powered machine (10) is completed within the time interval (T) of the starting time (t_{W}) of the subsequent work shift of the respective electrically powered machine (10).

5. The computer system (400) of any of claims 1-4, wherein the machine status comprises at least one of:
- a storage capacity of the electric energy storage system (12),
- a charging status of the electric energy storage system (12), and
- a power consumption of the electrically powered machine (10) in operation.

6. The computer system (400) of claim 5, wherein the power consumption is an expected power consumption estimated based on a stored history of power consumption of the electrically powered machine (10), and/or a calculated power consumption based on properties of the electrically powered machine (10) and on the work schedule.

7. The computer system (400) of any of claims 1-6, wherein the time interval (T) before the starting time (t_{W}) is determined based on at least one of an ambient temperature, the work schedule data, the machine status and the charging information.

8. The computer system (400) of claim 7, wherein the processing circuitry (402) is configured to calculate the time interval (T) to ensure that the temperature of the electric energy storage system (12) is at least above a minimum temperature threshold at the starting time (tw) of the subsequent work shift.

9. The computer system (400) of claim 8, wherein the rate of charge is varied during the charging process to ensure that the temperature of the electric energy storage system (12) is at least above the minimum temperature threshold at the starting time (tw) of the subsequent work shift.

10. The computer system (400) of claim 7 or 8, wherein the minimum temperature threshold at the starting time (tw) of the subsequent work shift for at least one electrically powered machine (10) is varied based on a planned workload of the electrically powered machine (10) during the subsequent work shift.

11. The computer system (400) of any of claims 1-10, wherein the processing circuitry (402) is configured to determine the charging process for each of the at least one electrically powered machine (10) such that the charging process for each of the at least one electrically powered machine (10) is planned to be initiated at a time point when a temperature of the electric energy storage system (12) of the respective electrically powered machine (10) satisfies a starting temperature criterion.

12. A computer-implemented method (2) for managing charging of electric energy storage systems (12) of electrically powered machines (10) in a fleet system (5), the fleet system (5) comprising the computer system according to any of claims 1-11, at least one electrically powered machine (10) and at least one charging station (14) configured to charge the electric energy storage system (12) of the at least one electrically powered machine (10),
the method (2) comprises obtaining (S1) by the processing circuitry (402):
- work schedule data, indicative of at least a charging availability time, of each of the at least one electrically powered machine (10),
- machine status, indicative of at least a charging requirement of each of the at least one electrically powered machine (10),
- charging information, indicative of at least a charging capacity of the at least one charging station (14), and
wherein the method (2) further comprises determining (S2), by the processing circuitry, a charging process for each of the at least one electrically powered machine (10) based on the work schedule data, the machine status and the charging information, such that the charging process for each of the at least one electrically powered machine (10) is planned to be completed within a time interval (T) before a starting time (t_{W}) of a subsequent work shift of each of the at least one electrically powered machine (10), and executing (S3), by the processing circuitry (402), the determined charging process.

13. A computer program product (420) comprising program code for performing, when executed by the processing circuitry (402), the method (2) of claim 12.

14. A non-transitory computer-readable storage medium (414) comprising instructions, which when executed by the processing circuitry (402), cause the processing circuitry (402) to perform the method (2) of claim 12.

15. A fleet system (5) comprising the computer system (400) of any of claims 1-11, at least one charging station (14), and at least one electrically powered machine (10) comprising an electric energy storage system (12).
